Europäisches Patentamt

(19) European Patent Office

Office européen des brevets

(11) Numéro de publication : **0 229 738 B1**

(12) **FASCICULE DE BREVET EUROPEEN**

(45) Date de publication du fascicule du brevet :
27.12.91 Bulletin 91/52

(51) Int. Cl.⁵ : **H04L 7/04**

(21) Numéro de dépôt : 87400013.6

(22) Date de dépôt : 06.01.87

(54) **Procédé et dispositif de régénération de l'intégrité du débit binaire dans un réseau plésiochrone.**

(30) Priorité : 10.01.86 FR 8600322

(43) Date de publication de la demande :
22.07.87 Bulletin 87/30

(45) Mention de la délivrance du brevet :
27.12.91 Bulletin 91/52

(84) Etats contractants désignés :
DE GB IT NL SE

(56) Documents cités :
EP-A- 0 161 177
FR-A- 2 482 807
US-A- 3 475 559
US-A- 3 597 547
PATENTS ABSTRACTS OF JAPAN, vol. 8, no.
247 (E-278)[1684], 13 novembre 1984; & JP-
A-59 123 337 (NIPPON DENKI K.K.) 17-07-1984

(73) Titulaire : **LMT RADIO PROFESSIONNELLE**
**46-47, Quai Alphonse Le Gallo**
**F-92103 Boulogne-Billancourt (FR)**

(72) Inventeur : **Lagoutte, Pierre**
**THOMSON-CSF SCPI 19, avenue de Messine**
**F-75008 Paris (FR)**
Inventeur : **Judeinstein, André**
**THOMSON-CSF SCPI 19, avenue de Messine**
**F-75008 Paris (FR)**

(74) Mandataire : **Chaverneff, Vladimir et al**
**THOMSON-CSF SCPI**
**F-92045 PARIS LA DEFENSE CEDEX 67 (FR)**

## Description

La présente invention se rapporte à un procédé et à un dispositif de régénération de l'intégrité du débit binaire dans un réseau plésiochrone.

Un réseau de communication de données ou de phonie MIC est dit plésiochrone lorsque les centres de commutation situés sur le parcours d'une liaison entre deux usagers ont des débits binaires inégaux mais très voisins les uns des autres. Il en résulte que chaque centre transmet à son voisin immédiat un peu plus ou un peu moins d'informations que celui-ci n'est capable de traiter. On dira que la réception est hyposynchrone lorsque la fréquence d'horloge de réception est un peu plus faible que celle de l'émetteur, et il perdra donc nécessairement des données. On dira qu'elle est hypersynchrone dans le cas contraire. Le centre récepteur ne recevra pas alors suffisamment de données, et il devra boucher les trous avec des éléments binaires de bourrage en général "inintelligibles".

Le circuit de réception d'un usager recevra dans un intervalle de temps donné un nombre d'éléments binaires différent de celui qui a été émis par son correspondant.

On dira que le réseau ne respecte pas l'intégrité du débit binaire du message. Ceci est sans conséquence dans les liaisons en phonie MIC normales où certains échantillons de parole peuvent être sautés ou répétés sans altérer l'intelligibilité du message entre les perturbations. Par contre, lorsqu'il s'agit de liaisons encryptées de bout en bout, la perte d'intégrité du débit binaire se traduit par un glissement du message chiffré par rapport à la clé de déchiffrement, ce qui entraîne une perte totale d'intelligibilité.

La présente invention a pour objet un procédé permettant d'apporter un remède à cette perte d'intelligibilité, en limitant à une durée acceptable la perte d'intelligibilité consécutive à une perturbation. Ce procédé doit pouvoir s'appliquer aux liaisons tramées conformes à la norme CEPT, aussi qu'à d'autres normes, comme par exemple la norme RITA.

On connaît d'après les documents FR-A-2 482 807 et FR-A- 2 002 292 des procédés d'insertion d'identificateurs dans une trame de signal multiplexé, mais ces identificateurs sont des mots dont les bits sont distribués tout au long de la trame, et sont utilisés pour l'ensemble de la trame multiplex pour la synchroniser. Il en est de même dans le document FR-A-2 002 292.

L'invention concerne un procédé de régénération de bout en bout de l'intégrité binaire sur une liaison établie à travers un réseau plésiochrone, utilisant la transmission par trames de plusieurs intervalles de temps, chaque intervalle de temps pouvant contenir plusieurs sous-canaux multiplexés, chaque intervalle de temps ou, le cas échéant, chaque sous-canal constituant une voie de transmission, elle est caractérisée par le fait que l'on multiplexe, à l'émission, dans chaque voie de transmission, en synchronisme avec l'information dont on veut régénérer, à l'arrivée, le nombre d'éléments binaires transmis, les éléments binaires d'information utile avec au moins un élément binaire d'un signal cyclique, qui possède une structure permettant de repérer sans ambiguïté le début de son cycle, cet élément binaire étant dénommé "marquant", et par le fait qu'à la réception, après démultiplexage, on sépare le marquant du signal utile, on analyse le cycle de marquants, et on recadre le signal utile en fonction de la détection des cycles de marquants.

La présente invention sera mieux comprise à la lecture de la description détaillée d'un mode de réalisation, pris comme exemple non limitatif et illustré par le dessin annexé, sur lequel :

- la figure 1 est un bloc diagramme d'un réseau conforme à l'invention ;
- la figure 2 est un bloc diagramme d'un circuit de traitement de marquant mettant en oeuvre le procédé de l'invention, et
- les figures 3, 4 et 5 sont des blocs diagrammes de détails de réalisation de circuits de la figure 2.

La présente invention est mise en oeuvre dans des réseaux de communication plésiochrones dans lesquels les informations numérisées (parole, données diverses) sont transmises sur un support temporel, appelé trame, se composant d'intervalles de temps, le nombre d'éléments binaires contenus dans un intervalle de temps, et le nombre d'intervalles de temps par trame variant suivant les normes.

Selon la norme CEPT, une trame est constituée de trente-deux intervalles de temps de huit éléments binaires chacun. Selon la norme RITA, la trame est constituée de vingt-quatre intervalles de temps de six éléments binaires chacun.

Le débit binaire possible dans chaque intervalle de temps est de 64 k bits/s pour une trame CEPT, et de 48 k bits/s pour une trame RITA.

Dans un réseau numérique homogène, l'ordre des éléments binaires est invariant. On peut donc leur faire jouer des rôles indépendants, et par conséquent multiplexer plusieurs sous-canaux dans un même intervalle de temps.

A titre d'exemple non limitatif, pour assurer l'interconnexion d'un réseau CEPT avec un réseau RITA, on utilise une interface appelée "passerelle". Dans le sens CEPT vers RITA, on ne pourra transmettre par cette interface que six éléments binaires par intervalle de temps de la trame CEPT, les deux autres étant perdus. Dans le sens RITA vers CEPT, six éléments binaires sur les huit d'un intervalle de temps de la trame CEPT sont significatifs, les deux éléments binaires supplémentaires étant soit non significatifs, soit redondants.

Par ailleurs, certains systèmes permettent de coaguler (réunir) plusieurs intervalles de temps consécutifs pour former un canal unique ayant un débit d'information multiple du débit de base.

On ne décrira ci-dessous que très brièvement les circuits de traitement du marquant du côté de l'émetteur d'un réseau de communication plésiochrone, étant donné que ces circuits sont banals en soi, et peuvent être facilement adaptés par l'homme de l'art aux variantes qu'il peut être amené à adopter en fonction des caractéristiques de ce réseau.

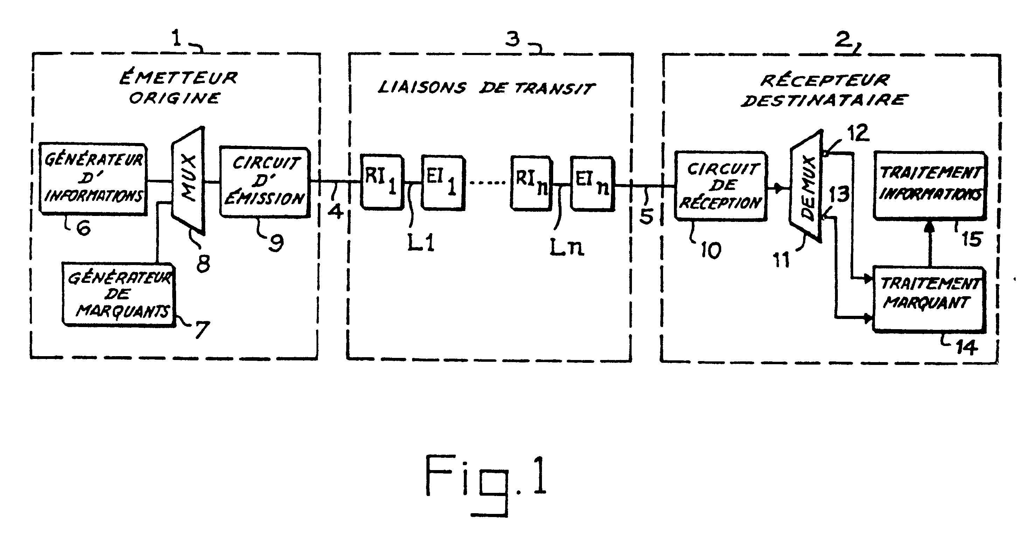

Les circuits schématiquement représenté en figure 1 comportent un émetteur origine 1 relié à un récepteur destinataire 2 par des circuits de transit 3, l'ensemble des éléments 1 à 3 formant une partie ou la totalité d'un réseau plésiochrone.

les circuits de transit 3 peuvent comporter plusieurs récepteurs intermédiaires $RI_1$ à $RI_n$ coopérant avec plusieurs émetteurs intermédiaires $EI_1$ à $EI_n$ via des liaisons L1 à Ln par câbles, faiceaux hertziens, etc...; des liaisons semblables 4,5 reliant les éléments 1 et 2 à l'élément 3.

L'émetteur d'origine 1 comporte essentiellement un générateur d'informations 6 et un générateur de marquants 7 reliés à un multiplexeur 8 dont la sortie est reliée par un circuit d'émission 9 à la liaison 4. Le générateur 6 numérise, le cas échéant, les signaux utiles qu'il reçoit de sources diverses à caractère analogique et constitue des trames dont chaque intervalle de temps comporte, dans un mode de réalisation préférentiel de l'invention, deux positions d'éléments binaires réservées aux marquants introduits au niveau du multiplexeur 8 par le générateur 7 et B positions pour les signaux utiles. Le générateur de marquants 7 et le multiplexeur 8 sont, bien entendu, synchronisés, par des moyens non représentés et évidents pour l'homme de l'art, avec les trames du générateur 6. Le générateur de marquants 7 est un générateur de séquence binaire fixe ou évolutive, de construction évidente pour l'homme de l'art. Le circuit d'émission 9 est un circuit apte à envoyer sur la liaison 4 les trames provenant du multiplexeur 8 : c'est par exemple un circuit d'émission téléphonique pour une liaison 4 par câble téléphonique.

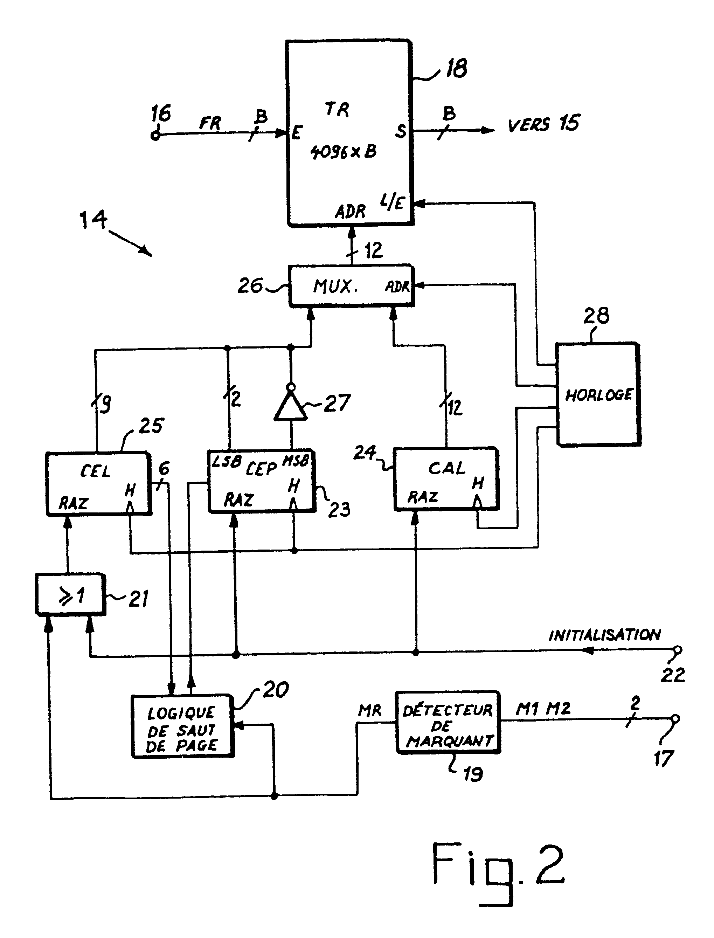

Le récepteur destinataire 2 comporte un circuit de réception 10 apte à recevoir les signaux arrivant par la liaison 5. Il est suivi d'un démultiplexeur 11 capable de présenter sur une sortie 12 les signaux d'information utiles, et sur une partie 13 les marquants introduits par le générateur 7. Ce démultiplexeur 11 est, bien entendu, synchronisé sur les trames reçues. Si les positions des marquants sont fixes, le démultiplexeur 11 envoie sur la sortie 13 les éléments binaires de tous les intervalles de temps se trouvant à ces positions. Si ces positions évoluent, le démultiplexeur 11 est commandé également en fonction de la loi d'évolution, qui est évidemment la même dans l'émetteur 1 et dans le récepteur 2. Cette loi d'évolution peut par exemple être déterminée par un générateur de séquence pseudo-aléatoire son homologue étant disposé dans le récepteur 2. La séquence utilisée peut en outre présenter des qualités cryptologiques c'est à dire qu'elle ne peut être reproduite sans avoir connaissance d'une clé de chiffrement et que cette clé ne peut pas être calculée à partir d'un échantillon de la séquence. Les sorties 12 et 13 du démultiplexeur 11 sont reliées à un circuit 14 de traitement de marquant qui sera décrit ci-dessous en référence à la figure 2. Ce circuit 14 est relié à un circuit 15 de traitement d'informations, correspondant au générateur 6 de l'émetteur 1. Ce circuit 15 traite les éléments binaires d'informations utiles des intervalles de temps reçus pour restituer ces informations, le cas échéant après conversion numérique-analogique.

Le circuit 14, représenté plus en détail sur la figure 2, comporte une borne d'entrée 16 reliée à la sortie 12 du démultiplexeur 11, et une borne d'entrée 17 reliée à la sortie 13 de ce démultiplexeur.

La borne 16 est reliée à l'entrée dune mémoire vive 18, qui a, dans le cas présent, une capacité de $4096 \times \underline{B}$ éléments binaires. La sortie de la mémoire 18 est reliée au circuit 15.

La borne 17 est reliée à un circuit 19 détecteur de marquant (comparateur de code), dont la sortie est reliée à un circuit 20 de commande de saut de page et à une entrée d'un circuit OU référencé 21.

Le circuit 14 comporte également une borne 22 sur laquelle on envoie de façon connue en soi, depuis des circuits non représentés, un front actif de signal d'initialisation à la mise en route ou au début de la réception d'une communication. La borne 22 est reliée à la deuxième entrée du circuit 21, ainsi qu'aux entrées de remise à zéro d'un compteur 23 d'écriture de pages et d'un compteur 24 d'adresses de lecture. La sortie du circuit 21 est reliée à l'entrée de remise à zéro d'un circuit 25 compteur d'écriture de lignes.

Le circuit 14 comporte en outre un multiplexeur 26 à l'entrée duquel on relie, d'une part la sortie du compteur 25, les deux fils de poids faibles, et, dans un mode de réalisation préférentielle de l'invention, le fil de poids fort de la sortie du compteur 23 via un inverseur 27 (dans le cas présent, la sortie du compteur 23 se fait sur trois fils, car on prévoit huit "pages" en écriture), et d'autre part la sortie du compteur 24. Dans le cas présent, la sortie du compteur 25 se fait sur neuf fils, qui représentent les poids faibles de la liaison à douze fils au multiplexeur 26, dont les poids forts proviennent du compteur 23. La sortie du compteur 24 se fait, bien entendu, sur douze fils.

La sortie du multiplexeur 26 est reliée à l'entrée d'adressage de la mémoire 18. Un circuit 28 générateur de signaux d'horloge est relié : à l'entrée de commande lecture/écriture de la mémoire 18, à l'entrée de commande du multiplexeur 26, et aux entrées de signaux d'horloge des compteurs 23 à 25. La sortie du compteur 25 est reliée à l'entrée du circuit 20 dont la sortie est reliée à l'entrée de comptage du compteur 23. Le circuit 28 est synchronisé avec les trames reçues.

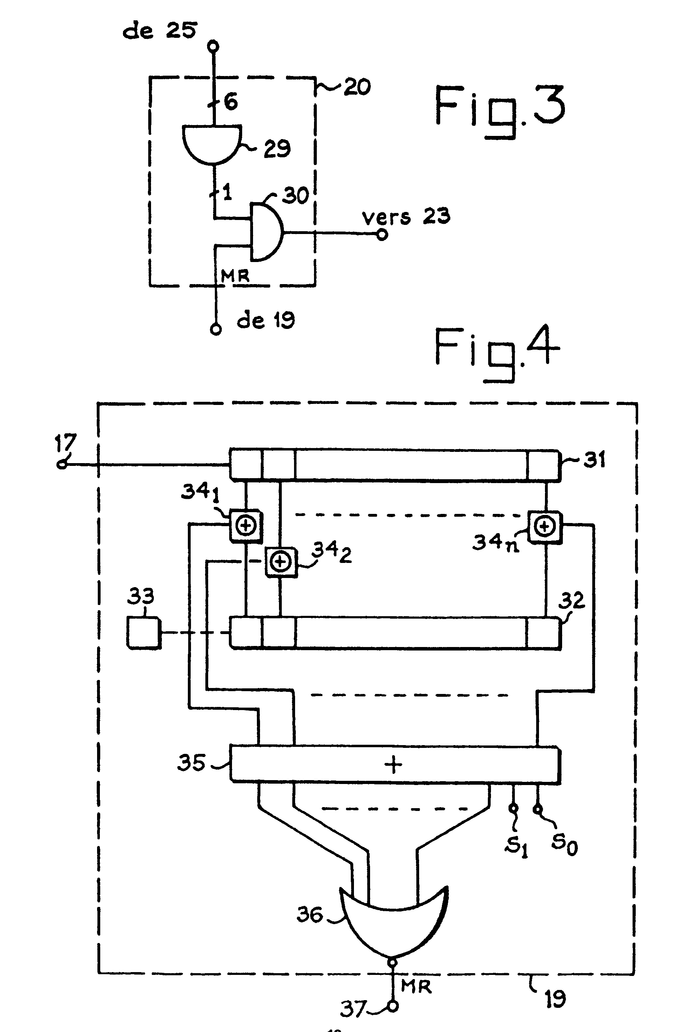

On a représenté sur la figure 3 un exemple de réalisation du circuit logique 20 de commande de saut de page. Il comporte une porte ET référencée 29, à six entrées dans le cas présent, ces six entrées étant reliées aux fils de poids les plus forts de la sortie du compteur 25. La sortie de la porte 29 est reliée à une entrée d'une autre porte ET 30 à deux entrées dont l'autre entrée est reliée à la sortie du circuit 30. La sortie de la porte 30 est reliée au compteur 23. Lorsqu'elle est dans l'état binaire "1" elle autorise l'avance du compteur 23 sous l'effet du signal d'horloge H.

On a représenté sur la figure 4 le bloc diagramme d'un exemple de réalisation du circuit 19. La borne 17 est reliée à l'entrée série d'un registre à décalage 31, ou d'un circuit analogue tel qu'une mémoire vive par exemple, dont la capacité $n$ est au moins égale au nombre d'éléments binaires nécessaire à l'identification du marquant d'un cycle. Le circuit 19 comporte un second registre 32 identique au registre 31, et qui est initialisé avec le code du marquant fourni par le générateur 33 similaire au générateur 7 de l'émetteur d'origine. La sortie de chacune des $n$ cellules du registre 31 est reliée à une première entrée d'une porte OU exclusif $34_1$ à $34_n$ respectivement, dont la seconde entrée est à chacune fois reliée à une sortie d'une cellule correspondante du registre 32. Dans le cas où le code de marquant a une structure fixe le registre 32 devient inutile et la seconde entrée des portes $34_1$ à $34_n$sera portée au niveau logique approprié par câblage direct. Les sorties des portes $34_1$ à $34_n$ sont reliées aux entrées d'un additionneur 35. Le nombre binaire disponible à la sortie de l'additionneur représente la distance de Hamming entre le code présent dans le registre 31 et le marquant de référence. Dans le circuit de la Fig. 4 toutes les sorties, sauf les sorties $S_0$ et $S_1$ de poids les plus faibles, de l'additionneur 35 sont reliées à une porte OU-NON 36 dont la sortie est reliée à une borne 37 constituant la borne de sortir du circuit 19. Celle ci est donc dans l'état "1" tant que la distance de Hamming est inférieure à 4.

le choix des marquants n'est pas limité aux seules séquences d'éléments binaires. Un caractère de marquant peut être constitué d'un nombre quelconque de bits transmis dans le même intervalle de temps de la trame, occupant des positions fixes ou variables selon une loi connue des extrémités émettrice et réceptrice. Si on utilise dans un réseau de transmission composite des intervalles de temps conformes aux normes CEPT pour certains tronçons, et conformes aux normes RITA pour d'autres tronçons, on ne pourra pas utiliser pour les intervalles de temps CEPT les positions d'éléments binaires qui sont abandonnées dans la "passerelle" (interface) CEPT vers RITA.

Dans un exemple particulier de réalisation on pourra prendre deux éléments binaires fixes $M_1$ et $M_2$

formant un "dibit" pouvant prendre les valeurs "1" et "2" (01 et 10 respectivement en notation binaire). Le cycle de marquant consistera en une suite de "dibits" "1" et "2". La réception dun "0" ou d'un "3" traduira une erreur de transmission. La situation inverse (0 et 3 au lieu de 1 et 2) est également possible.

les marquants étant injectés à l'entrée du réseau (dans l'émetteur 1) en synchronisme avec le message dont on veut régénérer, à l'arrivée (dans le récepteur 2), le nombre d'éléments binaires envoyés, l'intervalle qui sépare les débuts de cycles consécutifs de marquant subit les mêmes altérations et est rallongé ou raccourci de la même façon que le flot binaire utile.

Pour restituer à la sortie du réseau le même nombre d'éléments binaires qu'à l'entrée, il suffit :

1°)d'assurer l'intégrité du nombre de cycles du marquant. Cette condition est remplie si le cycle du marquant est assez long devant la durée de la trame et si le début de cycle n'est pas rendu indétectable par la perte d'intégrité binaire et/ou les erreurs dues à une mauvaise transmission dans le réseau.

2°) d'assurer la restitution dans chaque cycle de marquant du même nombre d'éléments binaires qu'à l'entrée. Si ces éléments binaires sont les mêmes à la sortie qu'à l'entrée, le débit binaire de sortie est intelligible. Si la traversée du réseau a provoqué un décalage de plésiochronisme, le débit binaire devient inintelligible jusqu'à ce qu'un nouveau début de cycle de marquant permette de retrouver le "fil" de la transmission.

Le flot binaire utile arrivant sur la borne 16 est enregistré dans la mémoire tampon 18 constituée de plusieurs "pages" contenant chacune un certain nombre de "lignes". La capacité de cette mémoire correspond au flot binaire transmis pendant un cycle de marquant. Dans le cas présent, la mémoire 18 comporte 8 pages de 512 lignes chacune, chaque ligne contenant $B$ éléments binaires, ce qui fait au total, comme indiqué ci-dessus, une capacité de 4096 x B éléments binaires.

L'écriture et la lecture dans la mémoire 18 sont commandées par l'horloge 28, elle-même synchronisée sur les trames incidentes. Les adresses d'écriture sont fournies par les compteurs 25 et 23, et celles de lecture par le compteur 24, indépendant des deux précédents. Les adresses de lecture progressent cycliquement sans rupture de séquence. C'est donc à l'écriture que s'effectue le recadrage du message binaire en fonction de la détection des cycles du marquant. La détection du début de cycle engendre le signal MR (à la sortie du circuit 19) qui doit entraîner le saut à un début de page du compteur 23. Ce signal MR remet à zéro le compteur 25. La fin du cycle de ce compteur 25 fait avancer d'une page le compteur 23. De même, lorsque le signal MR arrive légèrement en avance par rapport à la fin du cycle du compteur 25, il fait sauter au début de la page suivante le compteur 23.

Par contre, lorsque le signal MR arrive légèrement après la fin du cycle du compteur 25, il ne doit pas provoquer un deuxième saut de page.

Pour remplir ces conditions de saut de page, on néglige, par exemple, les trois fils de poids les plus faibles de la sortie du compteur 25, et on effectue la condition "ET" sur les autres fils (porte 29). Ainsi, la porte 30, qui permet au signal MR d'atteindre le compteur 23, n'est passante que lorsque les six éléments binaires de poids les plus élevés de la sortie du compteur 25 sont tous à "1", c'est à dire de la ligne 504 à la ligne 511 (dernière ligne) du compteur 25.

Si le marquant n'a pas été reconnu, donc en l'absence du signal MR, les deux compteurs 25 et 23 continuent leur progression.

Au début d'une communication, le compteur 24 est remis à zéro et pointe le ligne "0" de la page "0". L'adresse d'écriture est initialisée à la ligne "0" de la page "4" (à l'envoi d'un signal d'initialisation sur la borne 22, le compteur 23 est bien remis à zéro, mais du fait de la présence de l'inverseur logique 27 à sa sortie de poids le plus élevé $2^2 = 4$, il envoie la valeur "4" en tant qu'adresse de page à la mémoire 18). Ceci permet de tenir compte, au début de la communication, aussi bien d'un hypersynchronisme que d'un hyposynchronisme dans le réseau. Les informations lues dans les trois premières pages de la mémoire 18 sont alors inintelligibles.

Les critères déterminant le choix du marquant sont : une identification temporelle précise du début de cycle, une bonne résistance aux dégradations dues au réseau, une compatibilité avec les réseaux traversés (notamment en ce qui concerne la disparité des "1" et "0" binaires), une bonne facilité de détection, et une récupération rapide de l'intégrité binaire après des perturbations.

Ainsi, dans un exemple de réalisation, on a choisi d'insérer deux éléments binaires de marquant M1 et M2 dans chaque intervalle de temps, aux positions binaires 2 et 4 pour la norme CEPT et pour la norme RITA.

Pour pouvoir reconnaître si un marquant décalé est en avance ou en retard, il faut que son cycle dure plus du double du décalage maximal possible (par exemple trois trames au maximum). Au contraire, la récupération rapide après décalage suppose un cycle court. Les durées de cycles choisies sont donc le résultat d'un compromis entre ces deux exigences contradictoires.

Le code transmis dans un cycle de marquant doit : être facile à produire et à identifier, définir sans ambiguïté la trame de début de cycle même en présence de perturbations dues à des erreurs de transmission et au plésiochronisme, et avoir une faible probabilité d'imitation accidentelle par des paquets d'erreurs.

Dans un premier exemple de réalisation, le marquant a un cycle de 512 dibits. Il est constitué de 506 "2" suivis de 6 "1". Le début de cycle est reconnu par l'observation successive de la séquence :

....222111111222...

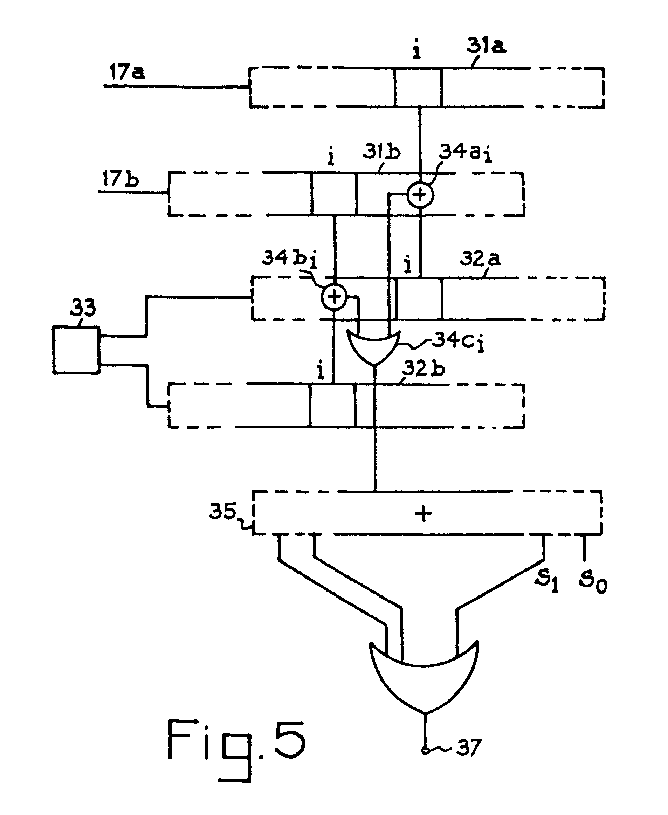

La reconnaissance de ce marquant est très facile à l'aide d'une simple condition de logique combinatoire dans une fenêtre de douze chiffres. Un exemple de circuit logique de reconnaissance, bien connu en soi, a été représenté sur la figure 5. Ce circuit est analogue à celui de la Fig. 4 mais les registres 31 et 32 ont été dédoublés en 31a, 31b, 32a,32b pour stocker séparement les deux bits de chaque dibit, ainsi que les sortes OU exclusif 34a,34b comparant séparement chaque bit d'un dibit et attaquant une porte OU 34 c donnant un résultat unique pour l'ensemble du dibit.

La distance de Hamming augmente dune unité pour chaque erreur et de deux unités pour chaque décalage. La reconnaissance du marquant est obtenue même en présence d'une erreur de transmission en négligeant la sortie SO de poids faible de l'additionneur 35.

L'accroissement de la distance de Hamming entre marquant et marquant décalé peut être obtenu soit en augmentant le nombre de symboles contenus dans la fenêtre de comparaison, mais cela reviendrait à compliquer la condition logique de reconnaissance, soit en optimisant la séquence de symboles contenue dans la fenêtre.

Dans un second exemple de réalisation, on utilise la séquence de sept dibits (entre barres obliques) =

...222/1112212/222... .

La distance de Hamming résultant alun décalage quelconque compris entre -3 et +3 rangs est au minimum de 4. C'est ce qui est mis en oeuvre dans le circuit de la figure 5. On peut également négliger la sortie $S_1$ de J'additionneur 35 ce qui permet de reconnaitre le marquant en présence de 2 erreurs de transmission.

## Revendications

1. Procédé de régénération de bout en bout de l'intégrité binaire sur une liaison établie à travers un réseau plésiochrone, utilisant la transmission par trames de plusieurs intervalles de temps, chaque intervalle de temps pouvant contenir plusieurs sous-canaux multiplexés, chaque intervalle de temps ou, le cas échéant, chaque sous-canal, constituant une voie de transmission, caractérisé par le fait que l'on multiplexe, dans chaque voie de transmission, à l'émission, en synchronisme avec l'information dont on veut régénérer, à l'arrivée, le nombre d'éléments binaires transmis, les éléments binaires d'information utile avec au moins un élément binaire d'un signal cyclique, qui possède une structure permettant de repérer sans ambiguïté le début de son cycle, cet élément binaire étant dénommé "marquant ", et qu'à la réception, après démultiplexage, on sépare le marquant du signal utile, on analyse le cycle de marquants, et on recadre le signal utile en fonction de la détection des cycles de marquants.

2. Procédé selon la revendication 1, caractérisé par le fait que l'on multiplexe le marquant sur des positions fixes de l'intervalle de temps.

3. Procédé selon la revendication 1, caractérisé par le fait que l'on multiplexe le marquant sur des positions, évoluant dans le temps selon des paramètres déterminés.

4. Procédé selon la revendication 1, caractérisé par le fait que l'on multiplexe le marquant sur des positions, évoluant dans le temps selon des paramètres déterminables.

5. Procédé selon l'une quelconque des revendications précédentes caractérisé par le fait que le marquant est un "dibit".

6. Procédé selon la revendication 5, caractérisé par le fait que les seules valeurs utilisées pour le dibit sont "1" et "2", la réception d'un "0" ou d'un "3" traduisant une erreur de transmission.

7. Procédé selon la revendication 5, caractérisé par le fait que les seules valeurs utilisées pour le dibit sont "0" et "3", la réception d'un "1" ou d'un "2" traduisant une erreur de transmission.

8. Procédé selon la revendication 6, caractérisé par le fait que la séquence du marquant est constituée d'un nombre fixe de "1" et de "2".

9. Procédé selon la revendication 7, caractérisé par le fait que la séquence du marquant est constituée d'un nombre fixe de "0" et de "3".

10. Procédé selon l'une des revendications 5 à 9, caractérisé par le fait que le marquant a un cycle comportant une longue suite de dibits identiques coupée par une séquence déterminée de quelques dibits différents.

11. Dispositif de régénération de l'intégrité binaire dans un réseau plésiochrone, pour transmissions par trames de plusieurs intervalles de temps, caractérisé par le fait qu'il comporte dans l'émetteur d'origine (1) un dispositif (8) de multiplexage de "marquant" produit par un générateur (7) de signal cyclique d'éléments binaires, avec les éléments binaires d'information utile, et dans le récepteur destinataire (2) un démultiplexeur (11) séparant les éléments binaires d'information utile du marquant, ce démultiplexeur étant relié à un dispositif (14) de traitement de marquant permettant de repérer le début du cycle du marquant, afin de recadrer le signal d'information utile en fonction de la détection de ce début de cycle.

12. Dispositif selon la revendication 11, caractérisé par le fait que le dispositif de traitement de marquant comporte une mémoire tampon (18) recevant les éléments binaires d'information utiles depuis le démultiplexeur, un détecteur de marquant (19) recevant du démultiplexeur les éléments binaires de marquant, la sortie de ce détecteur étant reliée à l'entrée de remise à zéro d'un premier compteur (25) d'écriture et à l'entrée d'un circuit logique (20) de "saut de page" disposé entre la sortie du premier compteur et l'entrée d'un second compteur (23) d'écriture de "pages", un compteur de lecture (24), ces trois compteurs étant reliés via un multiplexeur (26) à l'entrée d'adressage de la mémoire tampon, et un générateur de signaux d'horloge (28) synchronisé sur les trames reçues et relié aux entrées d'horloge des trois compteurs précités et à l'entrée de commande de lecture/écriture de la mémoire tampon.

13. Dispositif selon la revendication 12, caractérisé par le fait que le circuit logique de "saut de page" comporte une première porte ET C29) reliée à la sortie du premier compteur (25), la sortie de cette porte étant reliée à une entrée dune seconde porte ET (30) dont une autre entrée est reliée à la sortie du détecteur de marquant (19), la sortie de la seconde porte ET étant reliée à l'entrée du second compteur (23), et par le fait que la première porte ET est reliée aux fils de poids binaires les plus élevés de la sortie du premier compteur.

14. Dispositif selon l'une quelconque des revendications 10 à 13 caractérisé par le fait que le détecteur de marquant est basé sur la détermination de la distance de Hamming entre la séquence reçue (registre 31 ou les registres 31a, 31b) et une séquence de référence, le marquant étant reconnu lorsque cette distance est inférieure à la plus petite valeur pouvant résulter d'un décalage de séquence.

15. Dispositif selon l'une quelconque des revendications 11 à 14, caractérisé par le fait qu'il comporte une entrée (22) de signal d'initialisation reliée aux entrées de remise à zéro des trois compteurs précités (23 à 25), la liaison à l'entrée de remise à zéro du premier compteur se faisant via une porte OU (21) dont une autre entrée est reliée à la sortie du détecteur de marquant.

16. Dispositif selon la revendication 15, caractérisé par le fait que la sortie de poids binaire le plus élevé du second compteur (23) est reliée via un inverseur logique (27) à l'entrée du multiplexeur (26).

**Patentansprüche**

1. Verfahren zur Regeneration der binären Integrität einer über ein plesiochrones Netz hergestellten Verbindung von einem Ende zum anderen, unter Verwendung der Übertragung in Rahmen, die mehrere Zeitintervalle andauern, wobei Jedes Zeitintervall mehrere multiplexierte Unterkanäle enthalten kann und jedes Zeitintervall oder ggfs. Jeder Unterkanal einen Übertragungskanal bildet, dadurch gekennzeichnet, daß in Jedem Übertragungskanal auf der Sendeseite und synchron mit der Information, von der auf der Empfangsseite die Anzahl der übertragenen Binärelemente regeneriert werden soll, die die Nutzinformation darstellenden Binärelemente mit mindestens einem Binärelement eines zyklischen Signals multiplexiert werden, das eine solche Struktur besitzt, daß es möglich ist, unzweideutig den Beginn seines Zyklus zu erkennen, wobei dieses Binärelement als Markierer bezeichnet wird, und daß auf der Empfangsseite nach dem Demultiplexieren die Markierer vom Nutzsignal getrennt wird und der Markierzyklus analysiert wird und schließlich das Nutzsignal abhängig von der Erfassung der Markierzyklen zeitlich neu geordnet wird.

2. Verfahren nach Anspruch 1, dadurch gekennzeichnet, daß der Markierer auf feste Positionen innerhalb des Zeitintervalls multiplexiert wird.

3. Verfahren nach Anspruch 1, dadurch gekennzeichnet, daß der Markierer auf Positionen multiplexiert wird, die sich gemäß vorgegebenen Parametern mit der Zeit ändern.

4. Verfahren nach Anspruch 1, dadurch gekennzeichnet, daß der Markierer auf Positionen multiplexiert wird, die sich mit der Zeit gemäß vorherbestimmbaren Parametern verändern.

5. Verfahren nach einem beliebigen der vorhergehenden Ansprüche, dadurch gekennzeichnet, daß der Markierer ein "Dibit" ist.

6. Verfahren nach Anspruch 5, dadurch gekennzeichnet, daß die einzigen für das Dibit verwendeten Werte "1" und "2" sind, während der Empfang einer "0" oder "3" einen Übertragungsfehler anzeigt.

7. Verfahren nach Anspruch 5, dadurch gekennzeichnet, daß die einzigen für das Dibit verwendeten Werte "0" und "3" sind, während der Empfang einer "1" oder "2" einen Übertragungsfehler anzeigt.

8. Verfahren nach Anspruch 6, dadurch gekennzeichnet, daß die Markierersequenz aus einer festen Anzahl von "1" und "2" besteht.

9. Verfahren nach Anspruch 7, dadurch gekennzeichnet, daß die Markierersequenz aus einer festen Anzahl von "0" und "3" besteht.

10. Verfahren nach einem der Ansprüche 5 bis 9, dadurch gekennzeichnet, daß der Markierer einen Zyklus besitzt, der eine lange Folge gleicher Dibits enthält, die durch eine bestimmte Sequenz von einigen Dibits eines anderen Werts zerschnitten wird.

11. Vorrichtung zur Regeneration der binären Integrität in einem plesiochronen Netz für Übertragungen in Rahmen von mehreren Zeitintervallen, dadurch gekennzeichnet, daß sie im ursprünglichen Sender (1) eine Vorrichtung (8) zum Multiplexieren von in einem Generator (7), der ein zyklisches Signal von Binärelementen erzeugt, produzierten Markierern mit den Binärelementen der Nutzinformation, und im Bestimmungsempfänger (2) einen Demultiplexer (11) aufweist, der die Binärelemente der Nutzinformation vom Markierer trennt und an eine Vorrichtung (14) zur Verarbeitung des Markierers angeschlossen ist, in der es möglich ist, den Beginn des Zyklus des Markierers zu erfassen, um das Nutzinformationssignal abhängig von der Erfassung des Beginns dieses Zyklus neu zeitlich zu ordnen.

12. Vorrichtung nach Anspruch 11, dadurch gekennzeichnet, daß die Vorrichtung zur Verarbeitung des Markierers einen Pufferspeicher (18), der die Binärelemente der Nutzinformation vom Demultiplexer zugeführt erhält, einen Markierer-Detektor (19), der vom Demultiplexer die Binärelemente des Markierers zugeführt erhält, wobei der Ausgang dieses Detektors an den Nullsetzungseingang eines ersten Schreibzählers (25) und an den Eingang eines logischen Kreises (20) namens "Seitensprungkreis" angeschlossen ist, der zwischen den Ausgang des ersten Zählers und den Eingang eines zweiten Schreibzählers (23), "Seitenzähler" genannt, eingefügt ist, einen Lesezähler (24) wobei diese drei Zähler über einen Multiplexer (26) an den Adressiereingang des Pufferspeichers angeschlossen sind, und einen Taktsignalgenerator (28) aufweist, der auf die empfangenen Rahmen synchronisiert ist und an die Takteingänge der drei erwähnten Zähler und an den Steuereingang des Pufferspeichers für Lesen/Schreiben angeschlossen ist.

13. Vorrichtung nach Anspruch 12, dadurch gekennzeichnet, daß der "Seitensprungkreis" genannte logische Kreis ein erstes UND-Tor (29) aufweist, das an den Ausgang des ersten Zählers (25) angeschlossen ist, wobei der Ausgang dieses Tores an einen Eingang eines zweiten UND-Tors (30) angeschlossen ist, dessen anderer Eingang mit dem Ausgang des Markierer-Detektors (19) verbunden ist, und der Ausgang des zweiten UND-Tors mit dem Eingang des zweiten Zählers (23) verbunden ist, und daß das erste UND-Tor an die Anschlüsse der höchsten Binärwichtung des Ausgangs des ersten Zählers angeschlossen sind.

14. Vorrichtung nach einem beliebigen der Ansprüche 10 bis 13, dadurch gekennzeichnet, daß der Markierer-Detektor auf der Bestimmung des Hamming-Abstands zwischen der empfangenen Sequenz (Register 31 oder Register 31a, 31b) und einer Bezugssequenz beruht, wobei der Markierer als erkannt gilt, wenn dieser Abstand geringer als der kleinste Wert ist, der von einer Verschiebung der Sequenz herrühren könnte.

15. Vorrichtung nach einem beliebigen der Ansprüche 11 bis 14, dadurch gekennzeichnet, daß sie einen Initialisiersignaleingang (22) aufweist, der an die Nullsetzungseingänge der drei genannten Zähler (23 bis 25) angeschlossen ist, wobei die Verbindung an den Nullsetzungseingang des ersten Zählers über ein ODER-Tor (21) erfolgt, dessen anderer Eingang an den Ausgang des Markierer-Detektors angeschlossen ist.

16. Vorrichtung nach Anspruch 15, dadurch gekennzeichnet, daß der Ausgang des zweiten Zählers (23) mit der höchsten Wichtung über einen logischen Inverter (27) an den Eingang des Multiplexers (26) angeschlossen ist.

## Claims

1. A method for regenerating the binary integrity along the entire transmission path through a plesiochronous network using a framewise transmission, each frame including a plurality of time intervals and each time interval containing, as the case may be, a plurality of multiplexed secondary channels, each time interval or, as the case may be, each secondary channel, constituting a transmission channel, characterized in that in each transmission channel, the useful binary data elements are multiplexed on the transmission side in synchronism with the information whose number of transmitted binary elements is to be regenerated at the arrival, with at least one binary element of a cyclic signal which shows a structure allowing to detect without ambiguity the beginning of its cycle, this binary element being referred to as "marker", and that on the reception side and after the demultiplexing, the marker is separated from the useful signal, the marker cycle is analysed and the useful signal is re-arranged in accordance with the detection of the marker cycles.

2. A method according to claim 1, characterized in that the marker is multiplexed on fixed positions in the time interval.

3. A method according to claim 1, characterized in that the marker is multiplexed in positions which change with time according to predetermined parameters.

4. A method according to claim 1, characterized in that the marker is multiplexed on positions which change with time according to parameters which can be determined.

5. A method according to any one of the preceding claims, characterized in that the marker is a dibit.

6. A method according to claims 5, characterized in that the only values used for the dibit are "1" and "2", the reception of a "0" or a "3" being interpreted as a transmission error.

7. A method according to claim 5, characterized in that the only values used for the dibit are "0" and "3", the reception of a "1" or a "2" being interpreted as a transmission error.

8. A method according to claim 6, characterized in that the marker sequence is constituted by a fixed number of "1" and of "2".

9. A method according to claim 7, characterized in that the marker sequence is constituted by a fixed number of "0" and of "3".

10. A method according to claims 5 to 9, characterized in that the marker presents a cycle which includes a long sequence of identical dibits which is cut by a predetermined sequence of some dibits of different value.

11. A device for regenerating the binary integrity in a plesiochronous network using a framewise transmission, each frame including a plurality of time intervals, characterized in that it comprises, in the initial transmitter (1), a device (8) for multiplexing a "marker" which is produced by a generator (7) supplying a cyclic signal of binary elements, with the binary elements of useful information, and, in the final receiver (2), a demultiplexer (11) which separates the binary elements of useful information from the marker, this demultiplexer being connected to a device (14) for processing the marker and allowing to detct the beginning of the marker cycle in order to rearrange the signal of useful information in accordaance with the detection of the beginning of the cycle.

12. A device according to claim 11, characterized in that the marker processing device comprises a buffer memory (18) which receives the binary elements of useful information from the demultiplexer, a marker detector (19) which receives from the demultiplexer the binary marker elements, the output of this detector being connected to the zero setting input of a first write counter (22) and to the input of a logic circuit (20) referred to as "page jumper" and disposed between the output of the first counter and the input of a second write counter (23) referred to as "page counter", the processing device further comprising a read counter (24), these three counters being connected via a multiplexer (26) to the address input of the buffer memory, and a clock signal generator (28) which is synchronized to the received frames and is connected to the clock inputs of said three counters and to the control input for reading or writing of the buffer memory.

13. A device according to claim 12, characterized in that the "page jumper" logic circuit comprises a first AND gate (29) connected to the output of the first counter (25), the output of this gate being connected to an input of a second AND gate (30) whose other input is connected to the output of the marker detector (19), the output of the second AND gate being connected to the input of the second counter (23), and that the first AND gate is connected to the most significative output wires of the first counter.

14. A device according to claims 10 to 13, characterized in that the marker detector is based on the determination of the Hamming distance between the received sequence (register 31 or registers 31a, 31b) and a reference sequence the marker being considered as being detected as soon as this distance is shorter than the smallest value which may result from sequence shift.

15. A device according to any one of claims 11 to 14, characterized in that it comprises an input (22) for an initialization signal, this input being connected to the zero setting inputs of the three said counters (23 to 25), the connection to the zero setting input of the first counter being made via an OR gate (21) whose other input is connected to the output of the marker detector.

16. A device according to claim 15, characterized in that the most significative binary output of the second counter (23) is connected via a logic inverter (27) to the input of the multiplexer (26).

Fig.1

Fig.2

11

# Fig.3

de 25

20

6

29

1

30

vers 23

MR

de 19

# Fig.4

17

31

$34_1$

$34_n$

$34_2$

33

32

35 +

$S_1$ $S_0$

36

MR

37

19

12

Fig.5